# EUROPEAN PATENT SPECIFICATION

(11) **EP 4 358 291 B1**
(45) Date of publication and mention of the grant of the patent: **09.12.2026**
(21) Application number: 22825367.0
(22) Date of filing: 17.06.2022
(51) Int. Cl.: H01Q 1/00, H01Q 1/12, H01Q 1/24, F16B 2/06, F16B 7/18

(54) **MOUNTING APPARATUS FOR ANTENNA DEVICE ON ROOFTOP CONNER**
BEFESTIGUNGSVORRICHTUNG FÜR EINE ANTENNENVORRICHTUNG AUF EINEM DACHTONNER
APPAREIL DE MONTAGE POUR DISPOSITIF D'ANTENNE SUR UN COIN DE TOIT

(30) Priority: 18.06.2021 KR 20210079657; 16.06.2022 KR 20220073263
(43) Date of publication of application: 24.04.2024
(73) Proprietor: KMW Inc., Hwaseong-si, Gyeonggi-do 18462 (KR)
(72) Inventor: KIM, Duk Yong, Yongin-si Gyeonggi-do 17086 (KR); KIM, In Ho, Yongin-si Gyeonggi-do 17095 (KR); JI, Kyo Sung, Hwaseong-si Gyeonggi-do 18484 (KR); RYU, Chi Back, Hwaseong-si Gyeonggi-do 18392 (KR); KIM, Hee, Osan-si Gyeonggi-do 18131 (KR); PARK, Min Sik, Hwaseong-si Gyeonggi-do 18376 (KR); KIM, Byung In, Anaheim, California 92801 (US)
(74) Representative: Scheele, Friedrich
(86) International application number: PCT/KR2022/008588
(87) International publication number: WO 2022/265444

(56) References cited:
- CN-U- 209 249 666
- CN-U- 209 249 680
- JP-A- 2003 070 134
- JP-A- 2012 202 016
- JP-A- 2013 005 300
- JP-A- H01 298 802
- JP-B1- 6 151 390
- JP-Y2- H0 141 204
- KR-A- 20200 024 091
- KR-B1- 101 431 243
- KR-B1- 101 926 109

## Description

### [Technical Field]

The present disclosure relates to a mounting apparatus for an antenna device on a rooftop corner, and more particularly, to a mounting apparatus for an antenna device on a rooftop corner, which enables the antenna device to be easily installed without physical changes to the exterior of a building in a state where the installation height restrictions are satisfied, enables concealable installation of an optical cable so that the optical cable is not exposed to outside, facilitates directivity adjustment of the antenna device, and does not require many workers.

### [Background Art]

It is general to install an antenna for wireless communication in a high place where the surroundings are open for smooth transmission and reception with a wireless communication device that is located far away.

For this, the antenna is installed on a utility pole, an iron tower, or a building roof (rooftop), and especially in a downtown area, the antenna is often installed on the rooftop.

In this case, in order to install the antenna on the rooftop, a method is mainly used, in which a separate support pole for supporting the antenna in an upright state is installed on the building rooftop, and the antenna is fixed and installed onto the support pole.

In this case, it is often considered that the support pole is mainly fixed and installed onto the floor surface of the rooftop by using an anchor and the like. However, in this case, it is required to drill into the floor of the rooftop in order to fix the support pole, and this necessarily entails the damage to the building. In addition, in case of installing the antenna on the building roof (rooftop), large transport machinery, such as crane, is required due to the considerable weight of installation materials including the support pole, and thus the installation cost is greatly increased.

Further, in case that the antenna device is installed on the building rooftop, there is a problem in that various kinds of legal regulations of the corresponding installation country should be satisfied. For example, in order to install the antenna device on the building rooftop in a country, such as the US, it is required that the length in a diagonal direction of the antenna device does not exceed 3 ft so as to prevent accidents due to the collapse of the installation materials caused by strong wind pressure, and there are various kinds of regulations and diverse safety standards for operations of heavy equipment, such as large crane.

JP HO1 41204 Y2 illustrates for example an antenna mounting tool for installing an antenna support such as a parabolic antenna using a handrail on a balcony of an apartment, high-rise house, or general house that is suitable for installation in corners. The tool comprises a pair of fixing members having a flexible string for handrail binding and tensioning members movably slidably fitted into the fixing members. A pair of connecting members are connected between the fixed members so as to be adjustable in length. The other end is connected to a connecting portion of an antenna support pipe.

JP 2003 070134 A concerns a wiring installation method on a rooftop. Wire holders for fixing end parts of wires are attached to appropriate points at the upper end of a parapet on a rooftop. The wires are spanned between the wire holders or between the wire holder and an antenna body. The wires hold a power source line containing a communication line. Since many blocks, etc., are not required to be carried to the rooftop as before, the construction period is significantly shortened. Further, since no block contacting a rooftop floor is used, no rain water, etc., leaks as no cracks or corrosion occurs on the rooftop floor.

JP HO1 298802 A discloses a method for constructing an antenna pole on a rooftop of a building. Two concrete blocks, are placed side by side on the slab face in the inside of a straight line part or a corner part of the parapet and the parapet and the slab face are fixed and the antenna pole seat is fixed to the concrete blocks, while bridging over them. A pipe connecting plate is supported by two support metals, fixed to the parapet, the parabolic antenna pole P whose base is placed to the slab is inserted through the antenna pole seat and the pipe connecting plate and the parabolic antenna is tightened by tightening metallic fixtures, of the pipe connecting plate. Thus, the parabolic antenna pole P is easily fitted to the parapet with a step difference on the rooftop of a building.

CN 209 249 680 U elates to an outdoor antenna protection device. The outdoor antenna protection device comprises a rectangular block-shaped base, a U-shaped piece matched with a parapet wall in an inserted mode, and a supporting base arranged on the base and used for being connected with an antenna. The U-shaped piece comprises a transverse plate, and a first fixing plate and a second fixing plate which are respectively arranged at two ends of the transverse plate; a connecting plate is integrally arranged at the end, away from the transverse plate, of the first fixing plate, at least one connecting piece is arranged on the connecting plate, at least one positioning hole is formed in the edge of the upper side of the base, and a part in the connecting piece can penetrate through the connecting plate to be inserted into the positioning hole. According to the utility model, the outdoor antenna is protected under the condition that the roof structure is not damaged, and the outdoor antenna is prevented from being blown down by strong wind.

KR 2020 0024091 A discloses an antenna installation structure. According to one embodiment of the present invention, provided is the antenna installation structure configured to support and fix an antenna, which comprises: a plurality of railing mounting units including a railing mounting area mounted on a railing wall, an outer wall contact area extending perpendicular to one area of the railing mounting area to be in close contact with the outer surface of the railing wall, and a mounting extending area extending vertically to the other end area of the railing mounting area; a lower support unit connected to a lower area of the mounting extending area to support the railing mounting area; a pole support unit connected to the plurality of railing mounting units; and one or more support poles supported on the pole support unit and configured to support the antenna.

CN 209 249 666 U elates to an outdoor antenna protection device, which comprises a base, a tubular connecting seat, telescopic rods and hoops, wherein the tubular connecting seat is arranged along the vertical direction, the lower end of the tubular connecting seat is fixedly connected with the base, and the section of the tubular connecting seat is rectangular; the telescopic rods are connected to the upper ends of two adjacent side surfaces of the tubular connecting seat; the telescopic rod comprises a first telescopic pipe and a second telescopic pipe connected to the outer side of the first telescopic pipe in a sliding and sleeving mode. One end of the second telescopic pipe is fixedly connected with an elastic piece, the first telescopic pipe is sleeved with a fixing piece, and the fixing piece can be matched with the second telescopic pipe through rotation so that the inner wall of the elastic piece can lock or loosen the outer wall of the first telescopic pipe. According to the utility model, the outdoor antenna is protected under the condition that the roof structure is not damaged, and the outdoor antenna is prevented from being blown down by strong wind.

### [Disclosure]

### [Technical Problem]

The present disclosure has been devised to solve the above problems, and an object of the present disclosure is to provide a mounting apparatus for an antenna device on a rooftop corner, which enables the antenna device to be easily installed on a corner handrail of the rooftop without changes to the exterior of a building in a state where the installation height restrictions in the corresponding installation country are satisfied.

Further, another object of the present disclosure is to provide a mounting apparatus for an antenna device on a rooftop corner, which facilitates installation of the antenna device on a top part of a holding pole, and enables concealable installation of a cable so as to prevent appearance beauty from deteriorating.

In addition, still another object of the present disclosure is to provide a mounting apparatus for an antenna device on a rooftop corner, which facilitates directivity adjustment of the antenna device.

The technical problems of the present disclosure are not limited to the above-described technical problems, and other unmentioned technical problems may be clearly understood by those skilled in the art from the following descriptions.

### [Technical Solution]

The invention is defined in the independent claim. Further advantageous embodiments are defined in the dependent claims.

### [Advantageous Effects]

According to the mounting apparatus for an antenna device on a rooftop corner according to an embodiment of the present disclosure, it is possible to easily install the antenna device on the handrail of the rooftop corner without changes to the exterior of a building in a state where the installation height restrictions in the corresponding country of installation are satisfied.

Further, according to the present disclosure, since it is possible to install the optical cable without being exposed to the outside, the appearance beauty can be improved.

In addition, according to the present disclosure, manual adjustment is easy in adjusting directivity of the antenna device.

### [Description of Drawings]

FIGS. 1A to 1C are perspective views illustrating an installation state of various numbers of antenna devices using a mounting apparatus for an antenna device on a rooftop corner according to an embodiment of the present disclosure.
FIG. 2 is a perspective view explaining an installation process of an antenna device using a bottom support part and a mounting part among constitutions of a mounting apparatus for an antenna device on a rooftop corner according to an embodiment of the present disclosure.
FIGS. 3A and 3B are a downward perspective view and an upward perspective view illustrating an installation state of a single number of antenna devices at a corner of a rooftop.
FIGS. 4 and 5 are an exploded perspective view and a cross-sectional view illustrating a vibration reduction part among constitutions of a mounting apparatus for an antenna device on a rooftop corner according to an embodiment of the present disclosure.
FIG. 6 is a partial exploded perspective view and a partial enlarged view thereof illustrating a steering means of an antenna device.
FIGS. 7 and 8 are a partial exploded perspective view and a partial enlarged view thereof, and a cutaway perspective view illustrating a tilting means of an antenna device.

### [Explanation of symbols]

1: handrail 2: bottom surface
5: border frame 6: bottom support panel
7: diagonal connection frame 10: bottom support part
11: heavy object block 13: vertical support beam
14: inclined support beam 15: horizontal support beam
15, 21, 27: handrail support part21: seating panel part
22: top seating panel 22A: horizontal beam mounting rib
23A: handrail close contact panel 23B: handrail spacing panel
27: vibration reduction part 28: clamping bolt
29: clamping nut 30: elastic part
40: tilting means 41: tilting panel
42: worm wheel gear teeth 43: tilting guide panel
44: tilting mounting panel 44A: tilting slot
44B: tilting guide slot 45: tilting adjustment bolt
46: worm gear teeth 47A: hinge installation part
49: tilting axis hole 50: steering means
51: steering mounting panel 52: steering guide slot
53: steering guide bolt

### [Mode for Invention]

Hereinafter, a mounting apparatus for an antenna device on a rooftop corner according to an embodiment of the present disclosure will be described in detail with reference to the exemplary drawings.

In adding reference numerals to constituent elements in the drawings, it is to be noted that the same constituent elements have the same reference numerals as much as possible even if they are represented in different drawings. Further, in explaining embodiments of the present disclosure, the detailed explanation of related known constitutions or functions will be omitted if it is determined that the detailed explanation interferes with understanding of the embodiments of the present disclosure.

The terms, such as "first, second, A, B, (a), and (b)", may be used to describe constituent elements of embodiments of the present disclosure. The terms are only for the purpose of discriminating one constituent element from another constituent element, but the nature, the turn, or the order of the corresponding constituent elements is not limited by the terms. Further, unless otherwise defined, all terms (including technical and scientific terms) used herein have the same meanings as those commonly understood by those ordinary skilled in the art to which the present disclosure belongs. The terms that are defined in a generally used dictionary should be interpreted as meanings that match with the meanings of the terms from the context of the related technology, and they are not interpreted as an ideal or excessively formal meaning unless clearly defined in the present disclosure.

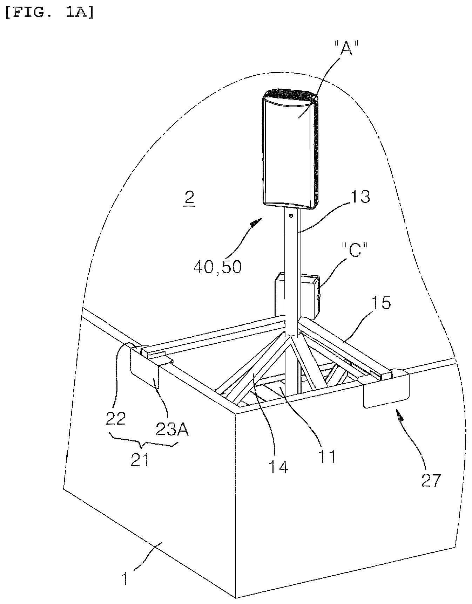

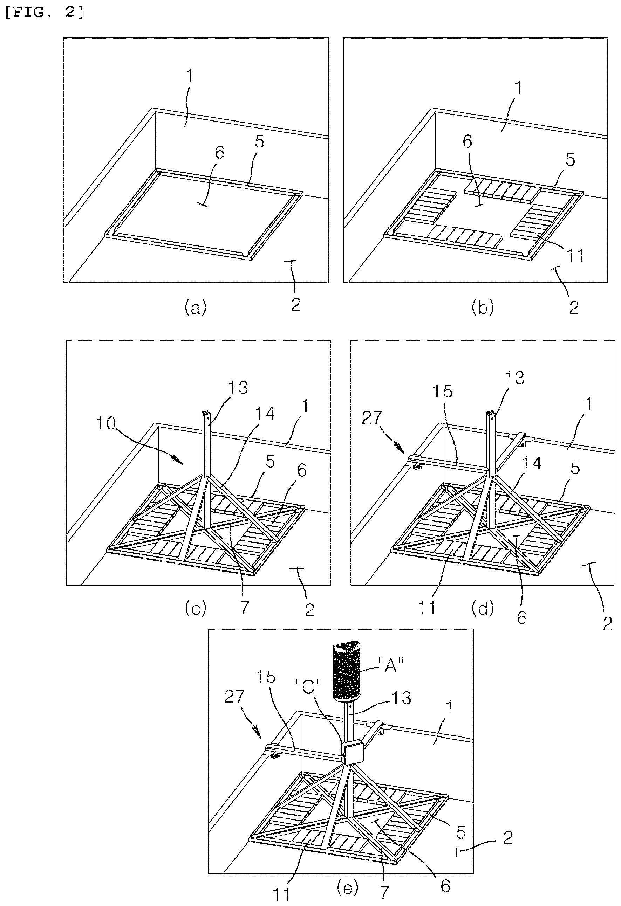

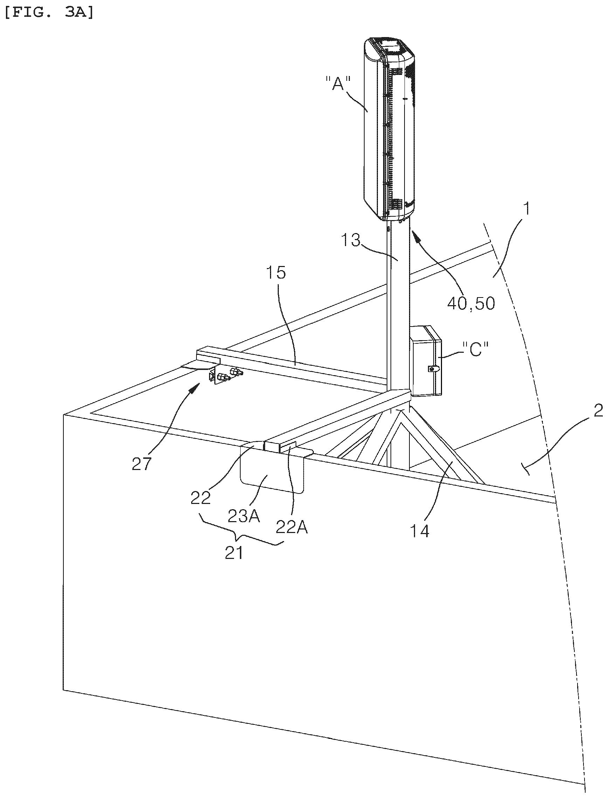

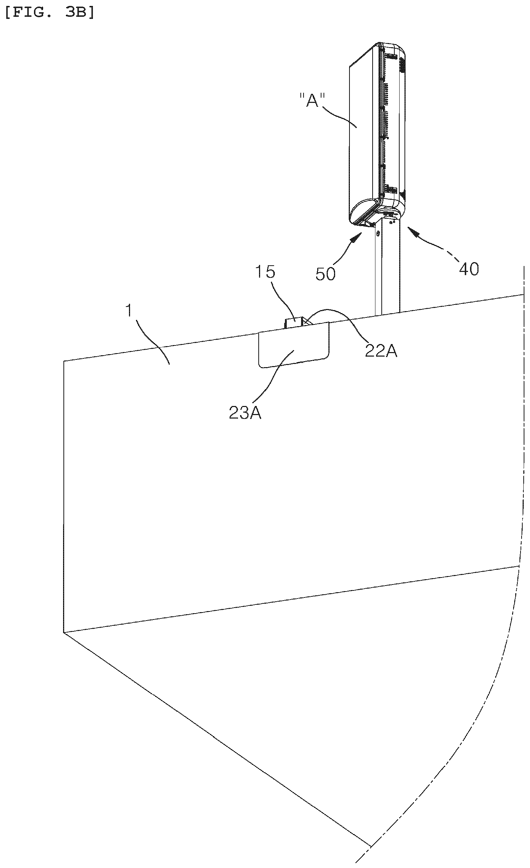

FIGS. 1A to 1C are perspective views illustrating an installation state of various numbers of antenna devices using a mounting apparatus for an antenna device on a rooftop corner according to an embodiment of the present disclosure. FIG. 2 is a perspective view explaining an installation process of an antenna device using a bottom support part and a mounting part among constitutions of a mounting apparatus for an antenna device on a rooftop corner according to an embodiment of the present disclosure. FIGS. 3A and 3B are a downward perspective view and an upward perspective view illustrating an installation state of a single number of antenna devices at a corner of a rooftop.

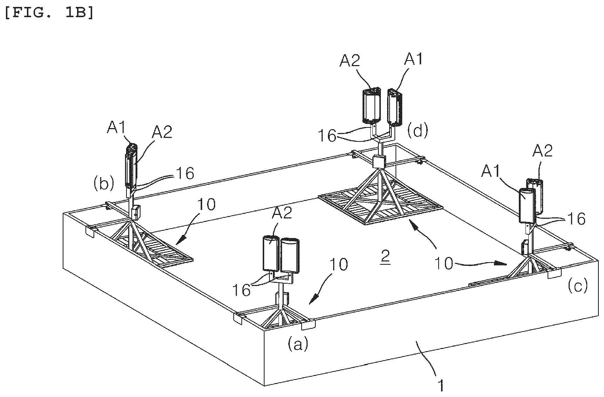

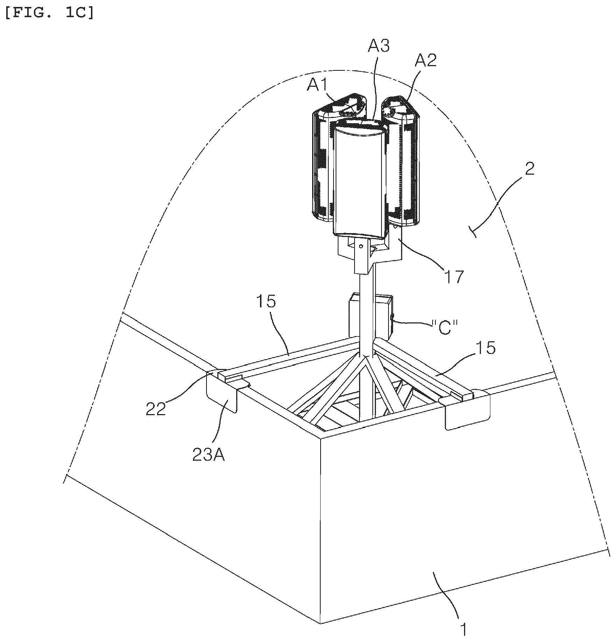

As referenced in FIGS. 1 to 3B, a mounting apparatus for an antenna device on a rooftop corner according to an embodiment of the present disclosure includes: a bottom support part 10 installed on a handrail 1 on a corner side of a rooftop, disposed on a bottom surface 2 on an inside adjacent to the handrail of the rooftop, and having a part extending upward in parallel to the handrail 1; a pair of handrail support parts 15, 21, and 27 extending horizontally from an upper part of the bottom support part 10 toward any one of the handrails 2 adjacent to each other; and a mounting part 40 and 50 coupled to the upper part of the bottom support part 10 and having a top on which the antenna device A is mounted.

Here, as for the antenna device A, as referenced in FIG. 1A, a single number of antenna device A may be coupled to an upper part of a single number of vertical support beam 13 to be described above, or as referenced in FIG. 1B, two antenna devices A1 and A2 may be coupled to the upper parts of the vertical support beam 13 through two branched antenna mounting beams 16, or as referenced in FIG. 1C, three antenna devices A1, A2, and A3 may be coupled to the upper part of the vertical support beam 13 through three branched antenna mounting beams 17.

As referenced in FIG. 1A, in case that the single number of antenna device A is coupled to the upper part of the vertical support beam 13, it is preferable that a front of the antenna device A is installed toward a corner side of the handrail 1 of the rooftop so that beamforming for a building outside direction is advantageous.

Further, as referenced in FIG. 1B, in case that two antenna devices A1 and A2 are coupled to two branched antenna mounting beams 16, the fronts of the antenna devices A1 and A2 may be installed in the same direction (refer to (a) of FIG. 1B); or the fronts of the antenna devices A1 and A2 may be installed in the opposite directions, that is, any one antenna device A1 may be installed to face the corner side of the handrail 1 of the rooftop and the other antenna device A2 may be installed to face an inside of the rooftop (refer to (b) of FIG. 1B); or the fronts of the antenna devices A1 and A2 may be installed to face different directions, that is, to face the directions at an angle of 45 degrees against the handrail 1 (refer to (c) of FIG. 1B); or the fronts of the antenna devices A1 and A2 may be installed to face different directions, that is, to face the directions at an orthogonal angle against the handrail 1 (refer to (d) of FIG. 1B).

Further, as referenced in FIG. 1C, in case that three antenna devices A1, A2, and A3 are coupled to three branched antenna mounting beams 17, the three antenna devices A1, A2, and A3 can cover the forward angle of 120 degrees each within the omnidirectional beamforming angle range, and thus there is an advantage that the antenna devices A1, A2, and A3 can be disposed on the handrail 1 of the rooftop corner so that the fronts of the antenna devices face proper directions.

In addition, as referenced in FIGS. 3A and 3B, almost all constituent elements of the bottom support part 10 excluding a top part of the vertical support beam 13 and the antenna device A installed thereon are installed with heights which are lower than or roughly the same as the top height of the handrail 1 (in case of handrail support part 15, 21, and 27), and thus there is an advantage that easy installation is possible within the range that does not deteriorate the beauty of the building exterior when observed from an outer lower part of the handrail 1.

Meanwhile, as referenced in FIG. 2, the bottom support part 10 may include: a plurality of heavy object blocks 11; a lower support part 5, 6, and 7 disposed to be seated on an inner bottom surface 2 adjacent to the handrail 1 on the corner of the rooftop; and an upper support part 13 and 14 disposed on an upper part of the lower support part 5, 6, and 7.

Here, for example, if the weight of the antenna device A is 30 kg, the plurality of heavy object blocks 11 may be provided as 10 or more heavy object blocks each having 30 kg so as to firmly support the weight more than 10 times the weight of the antenna device A on the bottom surface 2 on the inside of the rooftop without floating of the antenna device A. However, the number of heavy object blocks 11 is not necessarily limited thereto, and more or less than 10 heavy object blocks 11 can also be provided in consideration of the installation environment of the installed rooftop, such as wind volume and speed.

In particular, if the weight of each heavy object block 11 is 30 kg or less, even one worker can transport the heavy object block 11 by using the elevator or stairs in a building without the necessity of mobilizing heavy equipment, such as crane, and thus the installation cost and manpower can be saved.

The mounting apparatus for an antenna device on a rooftop corner according to an embodiment of the present disclosure has been designed so that the weight of not only the plurality of heavy object blocks 11 but also individual constituent elements, such as the bottom support part 10 and the handrail support part 15, 21, and 27 belonging to other installation materials, does not exceed 30 kg so that it can be sufficiently transported using only one worker's manpower.

Further, as illustrated in FIG. 2, the plurality of heavy object blocks 11 may be arranged in a long line so as to form one layer long in a predetermined direction on an upper part of a bottom support panel 6.

More specifically, as referenced in (b) of FIG. 2, the plurality of heavy object blocks 11 may be provided of a metal material of 30 kg or less, and can be individually seated on an upper surface of the bottom support panel 6 between a border frame 5 and a diagonal connection frame 7 among the constitutions of a lower support part 5, 6, and 7 to be described later.

In addition, although not illustrated in the drawing, the plurality of heavy object blocks 11 may be manufactured with certain standards, and may be formed to be able to be stably stacked in the form that fits together like a block toys of LEGO Company. In this case, handle parts may be provided on the plurality of heavy object blocks 11 for stable transport by one installer, and the handle parts may be formed without interference during stacking of the plurality of heavy object blocks 11.

Meanwhile, the bottom support part 10 may serve to fix the antenna device A onto a top part of the support beam 13 with a height that satisfies the height regulations of the antenna device A. Here, the height of the antenna device A can be adjusted by changing the installation location of the mounting part 40 and 50 against the vertical support beam 13 to be described later.

More specifically, as referenced in (a) to (c) of FIG. 2, the lower support part 5, 6, and 7 of the bottom support part 10 may include a bottom support panel 6 installed on the bottom surface 2 of the rooftop so that the plurality of heavy object blocks 11 are placed thereon, a border frame 5 configured to form a border end part of the bottom support panel 6, and a diagonal connection frame 7 cross-arranged to connect diagonal lines of the border frame 5.

The bottom support panel 6 may be provided in the form of a roughly rectangular (or square) steel plate, and the border frame 5 may be provided with a rigid frame material connected to the border part of the bottom support panel 6 in any one of a welding coupling method and a bolting coupling method. The diagonal connection frame 7 may be provided with a rigid frame material cross-arranged to connect corner parts facing each other among corners of the bottom support panel 6 that is a rectangular (or square) steel plate with diagonal lines.

Here, although not illustrated in the drawing, a plurality of levelers configured to adjust balancing with respect to the bottom surface 2 of the rooftop may be provided on the lower part of the bottom support panel 6 or the border frame 5. After the lower support part 5, 6, and 7 are installed and assembled on the bottom surface 2 of the rooftop, the plurality of levelers may serve to help safe fixing and installation of the handrail support part 15, 21, and 27 on the handrail 1 on the corner of the rooftop after the balancing adjustment using the levelers.

Meanwhile, as referenced in (c) of FIG. 2, the upper support part 13 and 14 among the constitutions of the bottom support part 10 may include a vertical support beam 13 extending for a predetermined height from a crossing of the diagonal connection frame 7 in a vertical direction in parallel to the handrail 1, and at least two inclined support beams 14 each having a bottom connected to each middle part of the border frame 5 and a top extending to be inclined from the bottom and connected to a middle part of the vertical support beam 13.

The bottom of the inclined support beam 14 is connected to each middle part of the border frame 5, and in case that four border frames 5 are provided to correspond to the number of sides of the rectangular bottom support panel 6, it is preferable that the number of inclined support beams 14 is also set to 4.

Meanwhile, the term "middle part" used herein does not mean only the accurately physically middle between both ends of the indicated constitution, but should be interpreted to include all of the remaining parts excluding one end part and the other end part in a state where the indicated constitution is divided into three equal parts.

Here, the upper support part 13 and 14 and the lower support part 5, 6, and 7 are provided with the rigid frame material (steel plate material) in all, and may be coupled to each other in any one of a welding coupling method and a bolting coupling method as one of methods suitable to the rigid frame material (or steel plate material) coupling methods.

Meanwhile, although not illustrated in detail in the drawing, any one of the vertical support beam 13 and the at least two inclined support beams 14 may be provided with a communicable inner space, and a wire installation port (not illustrated) in which an external wire is inserted may be formed on a bottom part of any one of the at least two inclined support beams 14.

As described above, since the external wire is inserted and installed from the bottom surface 2 adjacent to the handrail 1 of the rooftop through the wire installation port of the inclined support beam 14, and is installed in a concealable manner to extend toward the installed antenna device A through the inner spaces of the inclined support beam 14 and the vertical support beam 13, it is possible to simplify the wiring design of the complicated external wire and to prevent the appearance beauty of the building from deteriorating due to the external wire.

Meanwhile, as referenced in (d) and (e) of FIG. 2, a pair of handrail support parts 15, 21, and 27 may include at least two horizontal support beams 15 horizontally extending from the middle part of the vertical support beam 13 toward top parts of the handrails 2 adjacent to each other, and extending from the vertical support beam 13 corresponding to the top part of the inclined support beam 14.

It is preferable that the horizontal support beams 15 are provided one by one with respect to two adjacent handrails 1 having corners of 90 degrees, respectively, so that front end parts thereof are orthogonally seated by 90 degrees with respect to the two adjacent handrails 1.

In this case, the at least two horizontal support beams 15 may be seated and coupled onto the seating panel part 21 so that the front end parts thereof support the weight of the seating panel part 21 to be described later in a gravity direction. This will be described in more detail later.

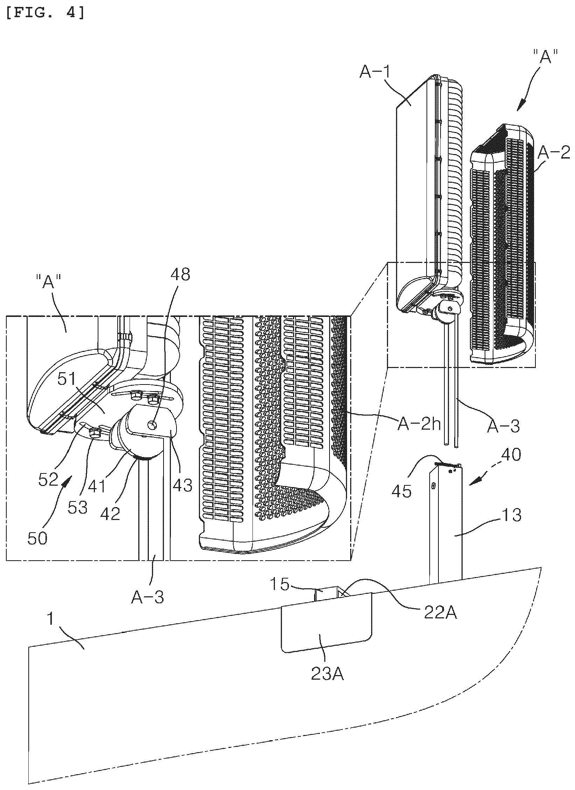

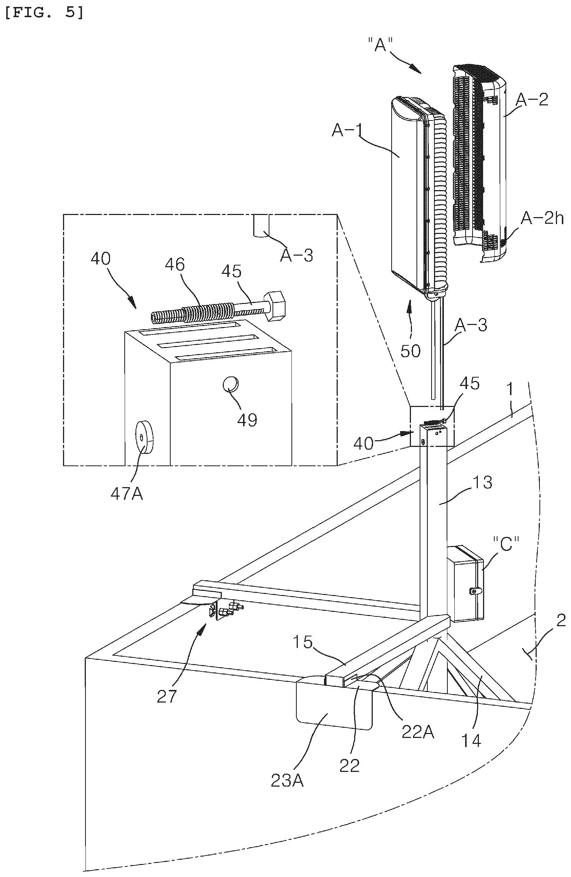

FIGS. 4 and 5 are an exploded perspective view and a cross-sectional view illustrating a vibration reduction part among constitutions of a mounting apparatus for an antenna device on a rooftop corner according to an embodiment of the present disclosure.

As referenced in FIGS. 4 and 5, the pair of handrail support parts 15, 21, and 27 may further include: a seating panel part 21 coupled to surround the top part of the handrail 1; and a vibration reduction part 27 supported on an inner wall of the handrail 1.

Here, as referenced in FIGS. 4 and 5, the seating panel part 21 may include: a top seating panel 22 configured to be seated on the top part of the handrail 1; a handrail close contact panel 23A extending to be bent from the top seating panel 22 and configured to come in close contact with an outer wall of the handrail 1; and a handrail spacing panel 23B extending to be bent from the top seating panel 22 and disposed in parallel to be spaced apart for a predetermined distance from the inner wall of the handrail 1.

The handrail close contact panel 23A may be formed so that the end part of the top seating panel 22 in an outward direction of the handrail 1 is orthogonally bent downward, and the handrail spacing panel 23B may be formed so that the end part of the top seating panel 22 in an inward direction of the handrail 1 is orthogonally bent downward.

The handrail close contact panel 23A of the seating panel part 21 may come in close contact with the outer wall of the handrail 1 and may have an area enough to endure the shaking (or gap) of the antenna device A caused by an external force, such as wind pressure, that is transferred to the antenna device A.

Accordingly, the handrail close contact panel 23A may be formed with an area which is larger than the area of the handrail spacing panel 23B that is enough to install the vibration reduction part 27 to be described later thereon.

The seating panel part 21 composed of the above-described constitution may be pre-assembled and fixed by the vibration reduction part 27 to be described later in a state where the horizontal support beam 15 is seated to surround the top part of the handrail 1 corresponding to an area that is orthogonal to the handrail 1, and the front end part of the horizontal support beam 15 may be fixed to the upper surface part.

For this, as referenced in FIGS. 4 and 5, the seating panel part 21 may further include a pair of horizontal beam mounting ribs 22A formed integrally with the top seating panel 22 and configured to seat and surround a part of the front end part of the horizontal support beam 15.

The pair of horizontal beam mounting ribs 22A may orthogonally extend upward with respect to the upper surface part of the top seating panel 22, and may be disposed in parallel to correspond to the length in the width direction of the horizontal support beam 15.

Between the pair of horizontal beam mounting ribs 22A, the front end part of the horizontal support beam 15 may be seated, and although not illustrated, the front end part of the horizontal support beam 15 may be firmly fixed to the horizontal beam mounting rib 22A through a welding coupling method and a bolting coupling method.

Meanwhile, as referenced in FIGS. 4 and 5, the vibration reduction part 27 may include: a clamping bolt 28 fastened to horizontally penetrate the handrail spacing panel 23B; a clamping nut 29 assembled to the clamping bolt 28; and an elastic part 30 provided on a front end part of the clamping bolt 28 and configured to be elastically supported on the inner wall of the corner side of the handrail 1.

Here, the elastic part 30 may be provided as a disc spring screw-fastened to a spring fastening hole (the reference numeral thereof is not denoted) provided on the front end part of the clamping bolt 28, the diameter of the disc spring becoming larger from a front end center of the clamping bolt 28 as getting closer toward the handrail 1.

As referenced in FIGS. 4 and 5, according to the vibration reduction part 27 composed of the above-described constitution, male threads (not illustrated) for the clamping nut 29 to be fastened thereto may be formed on an outer periphery of the clamping bolt 28, and after the clamping bolt 28 is penetratingly fastened to the handrail spacing panel 21a, the clamping nut 29 may be fastened to determine the tightening force in a screw connection method, and elastic part 30 may also be fastened to a screw fastening hole side provided with female threads on the front end part of the clamping bolt 28 in the screw connection method.

The vibration reduction part 27 serves to make the handrail close contact panel 23A and the elastic part 30 be firmly and tightly clamped onto the inner wall and the outer wall of the handrail 1, respectively, when the clamping nut 29 is tightened.

Here, since the elastic part 30 is provided to be elastically supported on the inner wall of the handrail 1, the vibration reduction part 27 may also serve to reduce external vibrations such as floating or shaking of the antenna device A caused by wind. That is, in case that the antenna device is installed on the handrail 1 constituting the corner of the rooftop, the antenna device A is subject to frequent wind pressure by usually strong winds, and the vibration reduction part 27 has the advantage of reducing the external vibrations and being able to block noise occurrence due to the vibrations in advance because the elastic part 30 is configured to be elastically supported on the handrail 1 against the floating or shaking of all constituent elements of the bottom support part 10 and the mounting part 40 and 50 including the antenna device A.

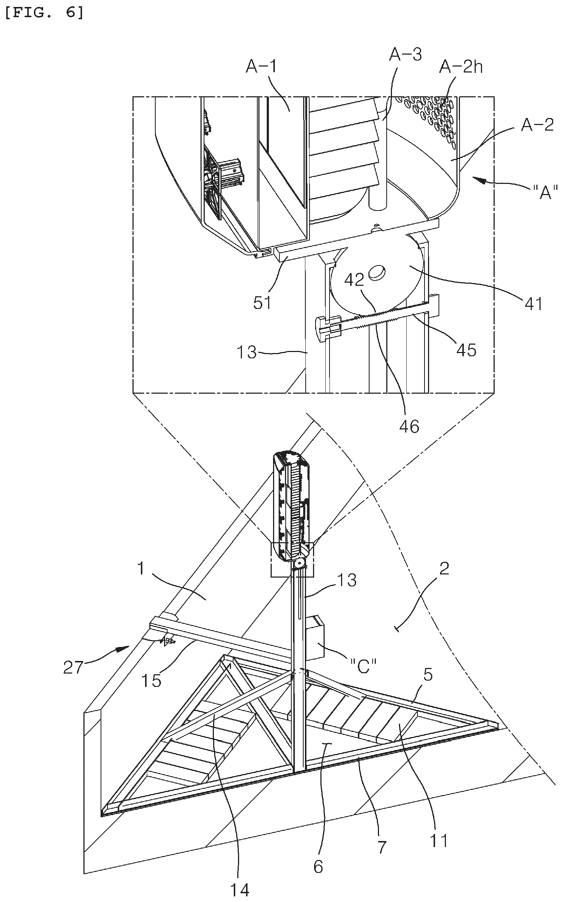

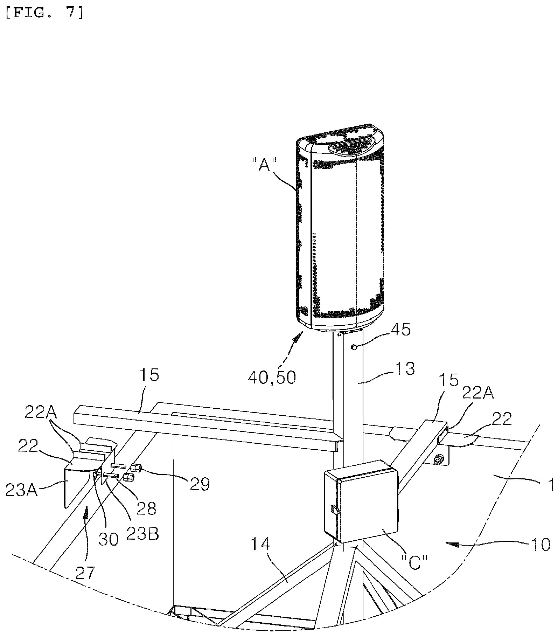

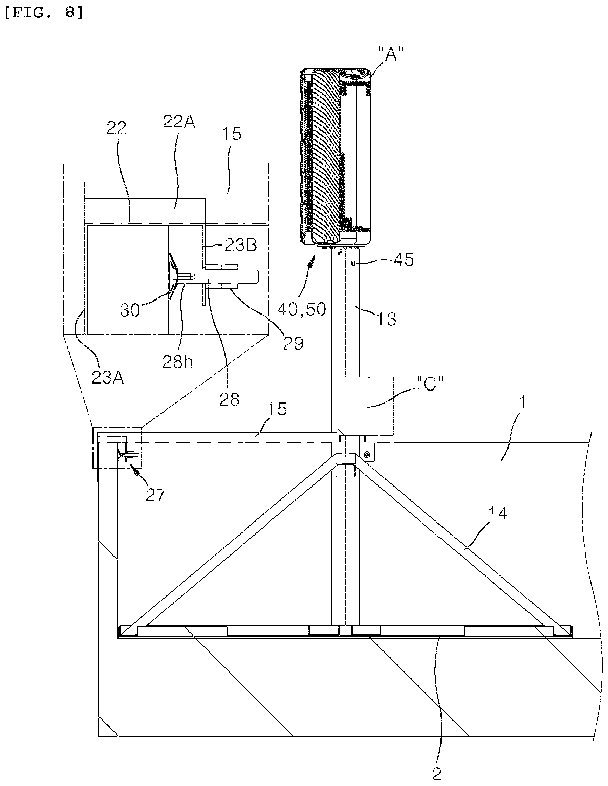

FIG. 6 is a partial exploded perspective view and a partial enlarged view thereof illustrating a steering means of an antenna device, and FIGS. 7 and 8 are a partial exploded perspective view and a partial enlarged view thereof, and a cutaway perspective view illustrating a tilting means of an antenna device.

As referenced in FIGS. 6 to 8, the antenna device A may be mounted on the top part of the vertical support beam 13 through the mounting part 40 and 50 in tilting-rotatable and steering-rotatable manner.

Here, as referenced in FIGS. 6 to 8, the mounting part 40 and 50 may include: a tilting means 40 configured to tilt and rotate the top part of the antenna device A coupled to the top part of the vertical support beam 13 in forward and backward direction centered on the bottom part of the antenna device A; and a steering means 50 configured to steer and rotate both left and right end parts of the antenna device A coupled to the top part of the vertical support beam 13 in left and right direction.

The steering means 50 may include: a steering mounting panel 51 configured to mediate the coupling of the antenna device A onto the vertical support beam 13 and to be tilted in interworking with the tilting rotation of the antenna device A in forward and backward direction by the tilting means 40; a pair of left and right steering guide slots 52 penetratingly formed along a predetermined steering rotation trajectory in up and down direction of the steering mounting panel 51; and a pair of left and right steering guide bolts 53 configured to be fastened to a lower surface of the antenna device A through penetrating lower parts of the pair of left and right steering guide slots 52.

Here, the steering mounting panel 51 may be coupled to the top part of the vertical support beam 13 through a tilting rotation axis (not illustrated) that penetrates a tilting panel 41 and a tilting guide panel 43 of the tilting means 40 to be described later in left and right direction.

Meanwhile, as referenced in FIGS. 6 to 8, the tilting means 40 may include: a hinge-fixed tilting panel 41 formed integrally with a lower surface of the steering mounting panel 51 provided to mediate the coupling of the antenna device A to the vertical support beam 13, and having a part configured to form a tilting rotation axis inside the vertical support beam 13; a pair of tilting guide panels 43 formed integrally with the lower surface of the steering mounting panel 51 on both left and right sides of the tilting panel 41 in parallel to the tilting panel 41; and a tilting adjustment bolt 45 connected to a bottom part of the tilting panel 41 and configured to adjust tilting of the tilting panel 41 at a predetermined angle in forward and backward direction.

Here, both end parts of the tilting rotation axis (not illustrated) may be hinge-fixed to a tilting axis hole 49 formed on both left and right surfaces of the top part of the vertical support beam 13.

In addition, worm wheel gear teeth 42 may be formed on an outer periphery of the bottom part of the tilting panel 41, and worm gear teeth 46 being tooth-engaged with the worm wheel gear teeth 42 of the tilting panel 41 may be formed on a part of the outer periphery of the tilting adjustment bolt 45.

The tilting adjustment bolt 45 may be coupled to an inside of the top part of the vertical support beam 13 horizontally in forward and backward direction.

Further, the tilting adjustment bolt 45 may be provided with a tilting adjustment part (the reference numeral thereof is not denoted) configured to be exposed to the outside by penetrating the vertical support beam 13 corresponding to an inner direction of the handrail, and the tilting angle of the antenna device A may be adjusted in accordance with the rotation amount of the tilting adjustment bolt 45 through the tilting adjustment part.

More specifically, the tilting adjustment bolt 45 may have a front end part that is fixed to be rotatably supported on a hinge installation part 47A provided on the front end part of the vertical support beam 13, and a tilting adjustment part of a rear end part of the tilting adjustment bolt 45 may be installed to be exposed through penetrating the rear end part of the vertical support beam 13.

Here, a worker can adjust the tilting rotation angle of the antenna device A by setting the rotation amount of the tilting adjustment bolt 45 by using a predetermined adjustment tool that can rotate a head part (i.e., tilting adjustment part) of the bolt.

Meanwhile, the tilting means 40 may further include a tilting mounting panel 44 formed with a tilting slot 44A formed integrally with the top surface of the vertical support beam 13 and penetrated by the bottom part of the tilting panel 41 and a pair of tilting guide slots 44B penetrated by the bottom part of the pair of tilting guide panels 43.

Here, since the tilting means 40 and the steering means 50 are disposed on the top part of the vertical support beam 13 which is relatively easy for an installation worker to access, they can provide the advantage for the installation worker or a manager of the antenna device A to be able to easily adjust the directivity of the antenna device A by using the tilting means 40 and the steering means 50.

Meanwhile, a control box C may be further installed in the middle area of the vertical support beam 13, and an optical cable A-3 that connects the control box C and the antenna device A with each other may be configured to penetrate up and down the steering mounting panel 51 and to be installed in a concealable manner from the outside by a concealing cover A-2 installed on the rear part of the antenna device A.

Here, the concealing cover A-2 may serve to prevent the worker or an unspecified person who can access the rooftop from coming in contact with a plurality of heat sink fins (the reference numeral thereof is not denoted) formed on the rear part of the antenna device A for system heat dissipation and getting burned, and at the same time, may serve not to spoil the appearance of a building including the antenna device A by making the optical cable A-3 be not exposed to the outside as described above.

On the concealing cover A-2, a plurality of air flowing holes A-2h capable of making an outdoor air flow therein may be formed to facilitate heat transfer to the outdoor air through the plurality of heat sink fins.

Further, the bottom of the concealing cover A-2 and the rear surface of the antenna device A may be disposed to be spaced apart for a predetermined distance from each other, or a through-installation port may be provided between them for installation of the optical cable A-3 therethrough.

As described above, according to the mounting apparatus for an antenna device on a rooftop corner according to an embodiment of the present disclosure, since the installation of the antenna device is possible through easy height adjustment of the bottom support part 10 even without shape change of the rooftop and easy clamping and bolting coupling against the handrail 1 on the corner side of the rooftop, the ease of installation can be improved, and various kinds of regulations in the country of installation can be satisfied.

Further, according to an embodiment of the mounting apparatus for an antenna device on a rooftop corner according to the present disclosure, it is possible to install the plurality of antenna devices A and A1 to A3 by easily utilizing the spaces of the handrail 1 on the corner of the rooftop generally corresponding to surplus spaces, and the installation convenience can be improved by separating and coupling the weights of respective constitutions so as to be able to be transported by one worker or installer.

As above, a mounting apparatus for an antenna device on a rooftop corner according to an embodiment of the present disclosure has been described in detail with reference to the accompanying drawings. However, embodiments of the present disclosure are not necessarily limited to the above-described embodiment, but it will be apparent that various modifications and implementation within an equal scope are possible by those of ordinary skill in the art to which the present disclosure pertains. Accordingly, the true scope of the present disclosure should be determined by the appended claims.

### [Industrial Applicability]

The present disclosure provides a mounting apparatus for an antenna device on a rooftop corner, which enables the antenna device to be easily installed on a handrail of the rooftop corner without changes to the exterior of a building in a state where the installation height restrictions are satisfied in the corresponding installation country, facilitates installation of the antenna device on a top part of a holding pole, and enables concealable installation of a cable so as to prevent appearance beauty of the antenna device from deteriorating.

## Claims

1. A mounting apparatus for an antenna device on a rooftop corner, the mounting apparatus comprising:
a bottom support part (10) configured to be installed on a handrail (1) on a corner side of a rooftop, configured to be disposed on a bottom surface (2) on an inside of the handrail (1) of the rooftop, and having a part configured to be extending upward in parallel to the handrail (1);
a pair of handrail support parts (15) configured to extend horizontally from an upper part of the bottom support part (10) toward the handrail (1), respectively; and
a mounting part (40, 50) coupled to the upper part of the bottom support part (10) and having a top configured for mounting the antenna device, **characterised in that** the bottom support part (10) comprises:
a plurality of heavy object blocks (11);
a lower support part (5) including a bottom support panel (6) configured to be installed on the bottom surface (2) of the rooftop so that the plurality of heavy object blocks (11) are placed thereon, a border frame (5) configured to form a border end part of the bottom support panel (6), and a diagonal connection frame (7) cross-arranged to connect diagonal lines of the border frame (5); and
an upper support part (13, 14) including a vertical support beam (13) configured to extend for a predetermined height from a crossing of the diagonal connection frame (7) in a vertical direction in parallel to the handrail (1), and at least two inclined support beams (14) each having a bottom connected to each middle part of the border frame (5) and a top extending to be inclined from the bottom and connected to a middle part of the vertical support beam (13).

2. The mounting apparatus of claim 1, wherein the upper support part (13, 14) and the lower support part (5) are coupled to each other in any one of a welding coupling method and a bolting coupling method.

3. The mounting apparatus of claim 1, wherein each of the plurality of heavy object blocks (11) is provided with a metal material of 30 kg or less, and is able to be individually seated on an upper surface of the bottom support panel (6) between the border frame (5) and the diagonal connection frame (7).

4. The mounting apparatus of claim 1, wherein any one of the vertical support beam (13) and the at least two inclined support beams (14) is provided with a communicable inner space, and
a wire installation port in which an external wire is inserted is formed on a bottom part of any one of the at least two inclined support beams (14).

5. The mounting apparatus of claim 1, wherein the pair of handrail support parts (15) comprises at least two horizontal support beams (15) configured to horizontally extend from the middle part of the vertical support beam (13) toward top parts of the handrail (1) adjacent to each other, and extending from top parts of the inclined support beams (14).

6. The mounting apparatus of claim 5, wherein the pair of handrail support parts (15) further comprises:
a seating panel part (21) configured to be coupled to surround the top part of the handrail (1); and
a vibration reduction part (27) configured to be supported on an inner wall of the handrail (1).

7. The mounting apparatus of claim 6, wherein the at least two horizontal support beams (15) are seated and coupled onto the seating panel part (21) so that front end parts thereof support a weight of the seating panel part (21) in a gravity direction.

8. The mounting apparatus of claim 6, wherein the seating panel part (21) comprises:
a top seating panel (22) configured to be seated on the top part of the handrail (1);
a handrail close contact panel extending to be bent from the top seating panel (22) and configured to come in close contact with an outer wall of the handrail (1); and
a handrail spacing panel (21a) extending to be bent from the top seating panel (22) and configured to be disposed in parallel to be spaced apart for a predetermined distance from the inner wall of the handrail (1).

9. The mounting apparatus of claim 8, wherein the seating panel part (21) further comprises a horizontal beam mounting rib formed integrally with the top seating panel (22) and configured to seat and surround a part of a front end part of the horizontal support beam (15).

10. The mounting apparatus of claim 6, wherein the vibration reduction part (27) comprises:
a clamping bolt (28) fastened to horizontally penetrate the handrail spacing panel (21a) disposed to be spaced apart from the inner wall of the handrail (1) in parallel;
a clamping nut (29) assembled to the clamping bolt (28); and
an elastic part (30) provided on a front end part of the clamping bolt (28) and configured to be elastically supported on the inner wall of the handrail (1).

11. The mounting apparatus of claim 10, wherein the elastic part (30) is provided as a disc spring screw-fastened to a spring fastening hole provided on the front end part of the clamping bolt (28), a diameter of the disc spring becoming larger from a front end center of the clamping bolt (28) as getting closer toward the handrail (1).

12. The mounting apparatus of claim 1, wherein the mounting part (40, 50) comprises:
a tilting means (40) configured to tilt and rotate a top part of the antenna device coupled to a top part of the vertical support beam (13) in forward and backward direction centered on a bottom part thereof; and
a steering means (50) configured to steer and rotate both left and right end parts of the antenna device coupled to the top part of the vertical support beam (13) in left and right direction.

13. The mounting apparatus of claim 12, wherein the steering means (50) comprises:
a steering mounting panel (51) configured to mediate coupling of the antenna device to the vertical support beam (13) and to be tilted in interwork with a tilting rotation of the antenna device in forward and backward direction by the tilting means (40);
a pair of left and right steering guide slots (52) penetratingly formed along a predetermined steering rotation trajectory in up and down direction of the steering mounting panel (51); and
a pair of left and right steering guide bolts (53) configured to be fastened to a lower surface of the antenna device through penetrating lower parts of the pair of left and right steering guide slots (52).

14. The mounting apparatus of claim 13, wherein the steering mounting panel (51) is coupled to the top part of the vertical support beam (13) through the tilting means (40).

## Patentansprüche

1. Eine Befestigungsvorrichtung für eine Antennenvorrichtung an einer Dachecke, wobei die Befestigungsvorrichtung umfasst:
ein unteres Stützteil (10), das so ausgebildet ist, dass es an einem Handlauf (1) an einer Eckseite eines Daches angebracht werden kann, das so ausgebildet ist, dass es an einer Unterseite (2) auf der Innenseite des Handlaufs (1) des Daches angeordnet werden kann, und das einen Abschnitt aufweist, der so ausgebildet ist, dass er sich parallel zum Handlauf (1) nach oben erstreckt;
ein Paar Handlauf-Stützteile (15), die jeweils so ausgebildet sind, dass sie sich horizontal von einem oberen Teil des unteren Stützteils (10) in Richtung des Handlaufs (1) erstrecken; und
ein Befestigungsteil (40, 50), das mit dem oberen Teil des unteren Stützteils (10) verbunden ist und eine Oberseite aufweist, die zur Befestigung der Antennenvorrichtung ausgebildet ist, **dadurch gekennzeichnet, dass** das untere Stützteil (10) umfasst:
eine Vielzahl von Schwerlastblöcken (11);
ein unteres Stützteil (5) mit einer unteren Stützplatte (6), die so ausgebildet ist, dass sie auf der Unterseite (2) des Daches angebracht wird, sodass die Vielzahl von Schwerlastblöcken (11) darauf platziert wird, einem Randrahmen (5), der so ausgebildet ist, dass er einen Randendabschnitt der unteren Stützplatte (6) bildet, sowie einen Diagonalverbindungsrahmen (7), der quer angeordnet ist, um die Diagonalen des Randrahmens (5) zu verbinden; und
ein oberes Stützteil (13, 14) mit einem vertikalen Stützträger (13), der so ausgebildet ist, dass er sich über eine vorbestimmte Höhe von einer Kreuzung des Diagonalverbindungsrahmens (7) in vertikaler Richtung parallel zum Handlauf (1) erstreckt, sowie mindestens zwei geneigte Stützträger (14), von denen jeder mit einem unteren Ende an jeweils einem Mittelteil des Randrahmens (5) befestigt ist und sich mit einem oberen Ende vom unteren Ende aus geneigt erstreckt und an einem Mittelteil des vertikalen Stützträgers (13) befestigt ist.

2. Die Befestigungsvorrichtung nach Anspruch 1, wobei der obere Stützteil (13, 14) und der untere Stützteil (5) mittels eines Schweißverfahrens oder eines Schraubverfahrens miteinander verbunden sind.

3. Die Befestigungsvorrichtung nach Anspruch 1, wobei jeder der mehreren Blöcke (11) für schwere Gegenstände aus einem Metallmaterial mit einem Gewicht von 30 kg oder weniger besteht und einzeln auf einer Oberseite der unteren Stützplatte (6) zwischen dem Randrahmen (5) und dem Diagonalverbindungsrahmen (7) aufgesetzt werden kann.

4. Die Befestigungsvorrichtung nach Anspruch 1, wobei entweder der vertikale Stützträger (13) oder die mindestens zwei geneigten Stützträger (14) mit einem durchgängigen Innenraum versehen ist und
an einem unteren Abschnitt eines der mindestens zwei geneigten Stützträger (14) eine Kabeldurchführungsöffnung ausgebildet ist, in die ein externes Kabel eingeführt wird.

5. Die Befestigungsvorrichtung nach Anspruch 1, wobei das Paar von Handlauf-Stützteilen (15) mindestens zwei horizontale Stützträger (15) umfasst, die so ausgebildet sind, dass sie sich horizontal vom mittleren Abschnitt des vertikalen Stützträgers (13) in Richtung der oberen Abschnitte des Handlaufs (1) nebeneinander erstrecken und sich von den oberen Abschnitten der geneigten Stützträger (14) aus erstrecken.

6. Die Befestigungsvorrichtung nach Anspruch 5, wobei das Paar von Handlauf-Stützteilen (15) ferner umfasst:
ein Sitzpaneelteil (21), das so ausgebildet ist, dass es so angekoppelt wird, dass es den oberen Teil des Handlaufs (1) umgibt; und
ein Schwingungsdämpfungsteil (27), das so ausgebildet ist, dass es an einer Innenwand des Handlaufs (1) abgestützt wird.

7. Die Befestigungsvorrichtung nach Anspruch 6, wobei die mindestens zwei horizontalen Stützträger (15) auf dem Sitzplattenelement (21) aufliegen und mit diesem verbunden sind, sodass deren vordere Endabschnitte ein Gewicht des Sitzplattenelements (21) in Schwerkraftrichtung tragen.

8. Die Befestigungsvorrichtung nach Anspruch 6, wobei das Sitzplattenelement (21) umfasst:
eine obere Sitzplatte (22), die so ausgebildet ist, dass sie auf dem oberen Teil des Handlaufs (1) aufliegt;
eine Handlauf-Anlegeplatte, die sich vom oberen Sitzplattenabschnitt (22) abknickt und so ausgebildet ist, dass sie in engen Kontakt mit einer Außenwand des Handlaufs (1) kommt; und
eine Handlauf-Abstandsplatte (21a), die sich vom oberen Sitzplattenabschnitt (22) abknickt und so ausgebildet ist, dass sie parallel zur Innenwand des Handlaufs (1) angeordnet ist und einen vorbestimmten Abstand zu dieser aufweist.

9. Die Befestigungsvorrichtung nach Anspruch 8, wobei das Auflageteil (21) ferner eine Befestigungsrippe für den horizontalen Träger aufweist, die einstückig mit dem oberen Auflageteil (22) ausgebildet ist und so konfiguriert ist, dass sie einen Teil eines vorderen Endabschnitts des horizontalen Stützträgers (15) aufnimmt und umgibt.

10. Die Befestigungsvorrichtung nach Anspruch 6, wobei das Schwingungsdämpfungsteil (27) umfasst:
eine Klemmschraube (28), die so befestigt ist, dass sie die Handlauf-Abstandsplatte (21a), die parallel und in einem Abstand zur Innenwand des Handlaufs (1) angeordnet ist, horizontal durchdringt;
eine Klemmutter (29), die mit der Klemmschraube (28) verbunden ist; und
ein elastisches Teil (30), das an einem vorderen Endabschnitt der Klemmschraube (28) vorgesehen ist und so ausgebildet ist, dass es elastisch an der Innenwand des Handlaufs (1) abgestützt wird.

11. Die Befestigungsvorrichtung nach Anspruch 10, wobei das elastische Teil (30) als Tellerfeder ausgebildet ist, die in ein am vorderen Endabschnitt des Klemmbolzens (28) vorgesehenes Federbefestigungsloch eingeschraubt ist, wobei der Durchmesser der Tellerfeder vom vorderen Endmittelpunkt des Klemmbolzens (28) aus in Richtung des Handlaufs (1) zunimmt.

12. Die Befestigungsvorrichtung nach Anspruch 1, wobei das Befestigungsteil (40, 50) umfasst:
eine Kippvorrichtung (40), die so ausgelegt ist, dass sie einen oberen Teil der Antennenvorrichtung, der mit einem oberen Teil des vertikalen Tragbalkens (13) verbunden ist, um dessen unteren Teil als Mittelpunkt in Vorwärts- und Rückwärtsrichtung kippt und dreht; und
eine Lenkvorrichtung (50), die so ausgelegt ist, dass sie sowohl den linken als auch den rechten Endteil der Antennenvorrichtung, die mit dem oberen Teil des vertikalen Tragbalkens (13) verbunden ist, in linker und rechter Richtung lenkt und dreht.

13. Die Befestigungsvorrichtung nach Anspruch 12, wobei die Lenkvorrichtung (50) umfasst:
eine Lenkbefestigungsplatte (51), die so ausgelegt ist, dass sie die Kopplung der Antennenvorrichtung an den vertikalen Tragbalken (13) vermittelt und in Zusammenwirkung mit einer Neigungsdrehung der Antennenvorrichtung in Vorwärts- und Rückwärtsrichtung durch die Neigungsvorrichtung (40) geneigt werden kann;
ein Paar linker und rechter Lenkführungsschlitze (52), die entlang einer vorbestimmten Lenkdrehbahn in Auf- und Abwärtsrichtung der Lenkbefestigungsplatte (51) durchgehend ausgebildet sind; und
ein Paar linker und rechter Lenkführungsbolzen (53), die so ausgebildet sind, dass sie durch Durchstecken der unteren Abschnitte des Paares linker und rechter Lenkführungsschlitze (52) an einer Unterseite der Antennenvorrichtung befestigt werden können.

14. Die Befestigungsvorrichtung nach Anspruch 13, wobei die Lenkbefestigungsplatte (51) über die Neigungsvorrichtung (40) mit dem oberen Teil des vertikalen Tragbalkens (13) verbunden ist.

## Revendications

1. Dispositif de fixation pour un équipement d'antenne sur un angle de toit, ledit dispositif de fixation comprenant :
une partie de support inférieure (10) conçue pour être installée sur une main courante (1) située sur un angle du toit, conçue pour être disposée sur une surface inférieure (2) à l'intérieur de la main courante (1) du toit, et comportant une partie conçue pour s'étendre vers le haut parallèlement à la main courante (1) ;
une paire d'éléments de support de main courante (15) conçus pour s'étendre horizontalement, respectivement, depuis une partie supérieure de l'élément de support inférieur (10) vers la main courante (1) ; et
un élément de fixation (40, 50) relié à la partie supérieure de l'élément de support inférieur (10) et comportant une partie supérieure conçue pour la fixation du dispositif d'antenne, **caractérisé en ce que** l'élément de support inférieur (10) comprend :
une pluralité de blocs de lestage (11) ;
une partie de support inférieure (5) comprenant un panneau de support inférieur (6) configuré pour être installé sur la surface inférieure (2) du toit de manière à ce que la pluralité de blocs de lestage (11) y soit placée, un cadre de bordure (5) configuré pour former une partie d'extrémité de bordure du panneau de support inférieur (6), et un cadre de liaison diagonal (7) disposé en croix pour relier les lignes diagonales du cadre périphérique (5) ; et
une partie de support supérieure (13, 14) comprenant une poutre de support verticale (13) configurée pour s'étendre sur une hauteur prédéterminée à partir d'un point d'intersection du cadre de liaison diagonal (7) dans une direction verticale, parallèlement à la main courante (1),
et au moins deux poutres de support inclinées (14) dont la partie inférieure de chacune est reliée à une partie centrale respective du cadre de bordure (5) et dont la partie supérieure s'étend de manière inclinée à partir de la partie inférieure et est reliée à une partie centrale de la poutre de support verticale (13).

2. Dispositif de montage selon la revendication 1, dans lequel la partie de support supérieure (13, 14) et la partie de support inférieure (5) sont assemblées l'une à l'autre selon l'un quelconque d'un procédé d'assemblage par soudage et d'un procédé d'assemblage par boulonnage.

3. Dispositif de montage selon la revendication 1, dans lequel chacun des plusieurs blocs destinés à des objets lourds (11) est constitué d'un matériau métallique pesant 30 kg ou moins, et peut être placé individuellement sur une surface supérieure du panneau de support inférieur (6) entre le cadre périphérique (5) et le cadre de liaison en diagonale (7).

4. Dispositif de montage selon la revendication 1, dans lequel l'une quelconque parmi la poutre de support verticale (13) et les au moins deux poutres de support inclinées (14) est pourvue d'un espace intérieur communicant, et
un orifice d'installation de câble dans lequel un câble externe est inséré est formé sur une partie inférieure de l'une quelconque parmi les au moins deux poutres de support inclinées (14).

5. Dispositif de montage selon la revendication 1, dans lequel la paire d'éléments de support de main courante (15) comprend au moins deux poutres de support horizontales (15) configurées pour s'étendre horizontalement depuis la partie centrale de la poutre de support verticale (13) vers les parties supérieures de la main courante (1) adjacentes l'une à l'autre, et s'étendant depuis les parties supérieures des poutres de support inclinées (14).

6. Dispositif de montage selon la revendication 5, dans lequel la paire d'éléments de support de main courante (15) comprend en outre :
un élément de panneau d'assise (21) configuré pour être couplé de manière à entourer la partie supérieure de la main courante (1) ; et
un élément de réduction des vibrations (27) configuré pour être supporté sur une paroi intérieure de la main courante (1).

7. Dispositif de montage selon la revendication 6, dans lequel les au moins deux poutres de support horizontales (15) sont posées et couplées sur l'élément de panneau d'assise (21) de telle sorte que leurs extrémités avant supportent le poids de l'élément de panneau d'assise (21) dans la direction de la gravité.

8. Dispositif de montage selon la revendication 6, dans lequel la partie de panneau d'assise (21) comprend :
un panneau d'assise supérieur (22) configuré pour être posé sur la partie supérieure de la main courante (1) ;
un panneau de contact étroit avec la main courante s'étendant de manière à être plié à partir du panneau d'assise supérieur (22) et configuré pour venir en contact étroit avec une paroi extérieure de la main courante (1) ; et
un panneau d'espacement par rapport à la main courante (21a) s'étendant de manière à être plié à partir du panneau d'assise supérieur (22) et configuré pour être disposé parallèlement à la paroi intérieure de la main courante (1) à une distance prédéterminée de celle-ci.

9. Dispositif de montage selon la revendication 8, dans lequel la partie de panneau d'appui (21) comprend en outre une nervure de montage de poutre horizontale formée d'un seul tenant avec le panneau d'appui supérieur (22) et configurée pour recevoir et entourer une partie d'une extrémité avant de la poutre de support horizontale (15).

10. Dispositif de montage selon la revendication 6, dans lequel la partie de réduction des vibrations (27) comprend :
un boulon de serrage (28) fixé de manière à traverser horizontalement le panneau d'espacement de la main courante (21a) disposé parallèlement et à distance de la paroi intérieure de la main courante (1) ;
un écrou de serrage (29) assemblé au boulon de serrage (28) ; et
un élément élastique (30) prévu sur une partie d'extrémité avant du boulon de serrage (28) et configuré pour être supporté de manière élastique sur la paroi intérieure de la main courante (1).

11. Dispositif de fixation selon la revendication 10, dans lequel l'élément élastique (30) est réalisé sous la forme d'un ressort à disque vissé dans un trou de fixation de ressort prévu sur la partie d'extrémité avant du boulon de serrage (28), le diamètre du ressort à disque augmentant à partir du centre de l'extrémité avant du boulon de serrage (28) à mesure qu'il se rapproche de la main courante (1).

12. Dispositif de montage selon la revendication 1, dans lequel la partie de montage (40, 50) comprend :
un moyen d'inclinaison (40) configuré pour incliner et faire pivoter une partie supérieure du dispositif d'antenne couplé à une partie supérieure de la poutre de support verticale (13) vers l'avant et vers l'arrière, en prenant comme centre sa partie inférieure ; et
un moyen de direction (50) configuré pour orienter et faire pivoter les parties d'extrémité gauche et droite du dispositif d'antenne couplé à la partie supérieure de la poutre de support verticale (13) vers la gauche et vers la droite.

13. Dispositif de montage selon la revendication 12, dans lequel le moyen de direction (50) comprend :
un panneau de montage de direction (51) configuré pour assurer le couplage du dispositif d'antenne à la poutre de support verticale (13) et pour être incliné en coordination avec une rotation d'inclinaison du dispositif d'antenne vers l'avant et vers l'arrière par le moyen d'inclinaison (40) ;
une paire de fentes de guidage de direction gauche et droite (52) formées de manière à traverser le panneau de montage de direction (51) le long d'une trajectoire de rotation de direction prédéterminée dans les directions vers le haut et vers le bas ; et
une paire de boulons de guidage de direction gauche et droite (53) configurés pour être fixés à une surface inférieure du dispositif d'antenne en traversant les parties inférieures de la paire de fentes de guidage de direction gauche et droite (52).

14. Dispositif de montage selon la revendication 13, dans lequel le panneau de montage de direction (51) est couplé à la partie supérieure de la poutre de support verticale (13) par l'intermédiaire du moyen d'inclinaison (40).
